**Europäisches Patentamt**

**European Patent Office**

**Office européen des brevets**

(19)

(11) Veröffentlichungsnummer: **0 111 526**
**B1**

(12) **EUROPÄISCHE PATENTSCHRIFT**

(45) Veröffentlichungstag der Patentschrift:
**10.12.86**

(51) Int. Cl.⁴: **B 60 T 8/18**

(21) Anmeldenummer: **83901921.3**

(22) Anmeldetag: **15.06.83**

(86) Internationale Anmeldenummer:
**PCT/EP 83/00156**

(87) Internationale Veröffentlichungsnummer:
**WO 84/00021 (05.01.84** Gazette 84/1)

(54) **HYDRAULISCHER BREMSDRUCKREGLER.**

(30) Priorität: **16.06.82 DE 3222614**

(43) Veröffentlichungstag der Anmeldung:
**27.06.84 Patentblatt 84/26**

(45) Bekanntmachung des Hinweises auf die Patenterteilung:
**10.12.86 Patentblatt 86/50**

(84) Benannte Vertragsstaaten:
**DE FR GB**

(56) Entgegenhaltungen:
**DE - A - 1 780 560**
**DE - A - 2 708 941**
**DE - A - 2 853 904**
**DE - A - 2 923 018**
**DE - B - 1 655 003**
**FR - A - 2 351 830**
**GB - A - 773 642**
**US - A - 3 741 610**
**US - A - 4 221 437**

(73) Patentinhaber: **VOLKSWAGEN AKTIENGESELLSCHAFT,**
**D-3180 Wolfsburg (DE)**

(72) Erfinder: **SCHULZE, Bernd-Guido, Menzelstrasse 2,**
**D-3180 Wolfsburg 12 (DE)**

## Beschreibung

Die Erfindung bezieht sich auf einen hydraulischen Bremsdruckregler mit nichtlinear und stetig verlaufender Kennlinie für die hydraulische Bremsanlage eines Kraftfahrzeuges der im Oberbegriff des Patentanspruchs 1 genannten Art. Ein Bremsdruckregler dieser Art ist aus der GB-A-773642 bekannt.

Dieser bekannte Bremsdruckregler enthält eine einen Druckeingang aufweisende erste Druckkammer und eine einen Druckausgang aufweisende zweite Druckkammer, welche durch einen axial verschiebbaren ersten Kolben voneinander getrennt sind. Der erste Kolben trägt ein Regelventil, durch dessen Öffnen und Schliessen zwischen der ersten und der zweiten Druckkammer eine druck- und strömungsmässige Verbindung für das hydraulische Druckmedium herstellbar und wieder unterbrechbar ist. Die zweite Druckkammer wird axial durch einen unabhängig vom ersten Kolben axial verschiebbaren zweiten Kolben begrenzt, der über ein Kraftübertragungsglied derart mit dem Ventilglied des Regelventils gekoppelt ist, dass das Öffnen und Schliessen dieses Regelventils vom axialen gegenseitigen Abstand der beiden Kolben abhängig ist, wobei eine nichthydraulische erste Kraftvorrichtung mit linearer Charakteristik, nämlich eine mechanische Federvorrichtung, und eine davon unabhängige nichthydraulische zweite Kraftvorrichtung mit progressiver Charakteristik, ebenfalls eine mechanische Federvorrichtung, vorgesehen sind, von denen die eine in einem dem Eingangsdruck entgegenwirkenden Sinn am ersten Kolben und die andere in gleicher Wirkrichtung am zweiten Kolben angreift. Durch eine von aussen betätigbare Schraubvorrichtung kann dabei die Vorspannung der zweiten Kraftvorrichtung einjustiert werden.

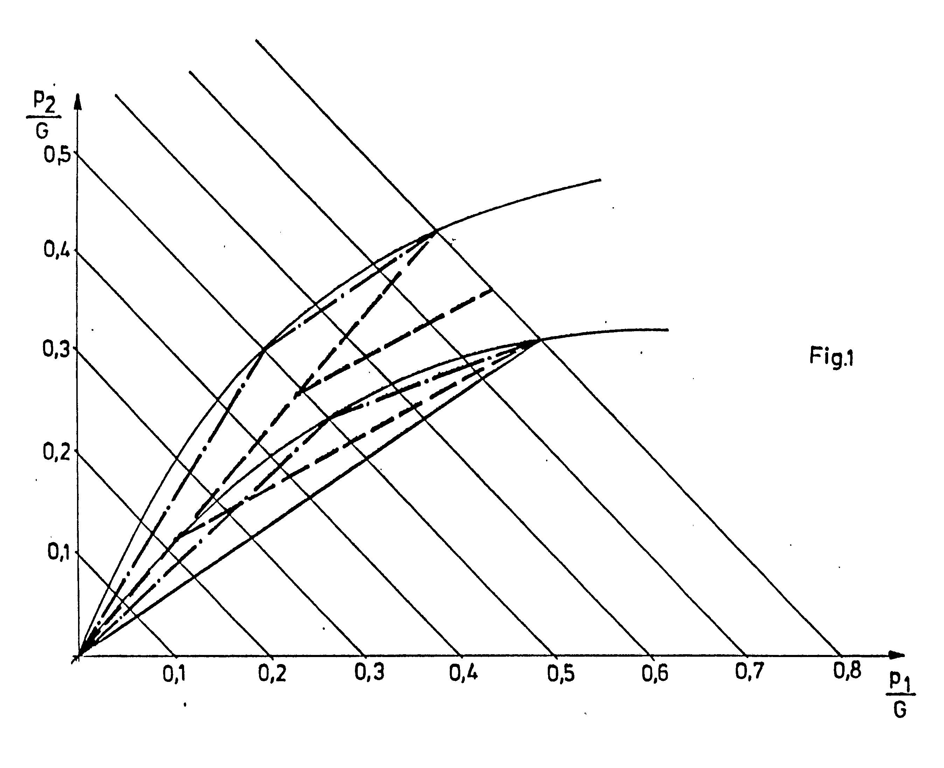

Bekanntlich wird beim Abbremsen eines Kraftfahrzeuges die Vorderachse gegenüber der statischen Gewichtskraft stärker belastet und die Hinterachse entsprechend entlastet. Wie man weiss, ist eine optimale Abbremsung des Fahrzeugs dann erreicht, wenn Vorder- und Hinterachse bei den jeweiligen Strassenverhältnissen und der jeweiligen Geschwindigkeit die gleiche Kraftschlussausnutzung beanspruchen. Das ist beispielsweise dann der Fall, wenn Vorder- und Hinterachse beim Abbremsen gleichzeitig in den Übergangsbereich zum Blockieren gelangen. Bei Kenntnis der Fahrzeugabmessungen, des Fahrzeuggewichtes und der Schwerpunktslage des Fahrzeuges lässt sich für jede Kraftschlussbeanspruchung die optimale Bremskraftverteilung zwischen Vorder- und Hinterachse berechnen. In Fig. 1 ist diese ideale Bremskraft- bzw. Bremsdruckverteilung, bezogen auf das Fahrzeuggewicht, für den Beladungszustand «Vollast» und «Leerlast + Fahrer» qualitativ als dünne Vollinie dargestellt. Man erkennt, dass es sich dabei um stetige nichtlineare Kennlinien handelt. Für jeden Belastungszustand des Kraftfahrzeuges gilt eine zwischen diesen beiden Grenzkennlinien liegende eigene Kurve.

Damit ein Überbremsen der Hinterachse, d.h. ein Blockieren der Hinterräder bei noch nicht blockierten Vorderrädern in jedem Falle wegen des sich sonst ergebenden instabilen Fahrverhaltens vermieden wird, muss bei der Bemessung einer hydraulischen Bremsanlage die Bremskraftverteilung auf Vorder- und Hinterachse so gewählt werden, dass die wirksame Bremskraft an der Hinterachse nie höher ist als die für den Fall der idealen Abbremsung in Fig. 1 dargestellte Bremskraft.

Eine Überbremsung der Hinterachse wäre somit in einfacher Weise dadurch zu vermeiden, dass eine feste Bremskraftverteilung vorgesehen wird, die sich z.B. daran orientieren könnte, dass die reale Bremskraftverteilung bei der Abbremsung a = 0,8 ein Punkt der in Fig. 1 dargestellten idealen Bremskraftverteilung für den Beladungsfall «Leerlast + Fahrer» ist. Bei einer solchen festen Bremskraftverteilung ergäbe sich dann die in Fig. 1 als dicke Vollinie dargestellte Gerade.

Es ist leicht erkennbar, dass bei einer derartigen festen Bremskraftverteilung nur für diesen speziellen Lastfall und für die vorausgesetzte Abbremsung a = 0,8 ideale Verhältnisse vorlägen, dass dagegen bei einer grösseren Beladung des Fahrzeuges oder bei einer geringeren Kraftschlussbeanspruchung sich weit von einer idealen Abbremsung entfernt liegende Verhältnisse ergäben.

Bei Verwendung eines aus der GB-A-773642 bekannten hydraulischen Bremsdruckreglers ergäben sich zwar günstigere Verhältnisse, weil für die Bremskraftverteilung dann – in Fig. 1 – statt der als Vollinie dargestellten Geraden eine nichtlineare und stetige, d.h. eine stetig gekrümmte Kurve vorläge, durch welche bei geringeren Kraftschlussbeanspruchungen eine bessere Näherung an die ideale Bremskraftverteilung für den angenommenen Beladungsfall «Leerlast + Fahrer» gewährleistet wird als durch die Gerade. Aber auch hierbei ergäben sich bei einer grösseren Beladung des Fahrzeuges stets wieder weit von einer idealen Abbremsung entfernt liegende Verhältnisse.

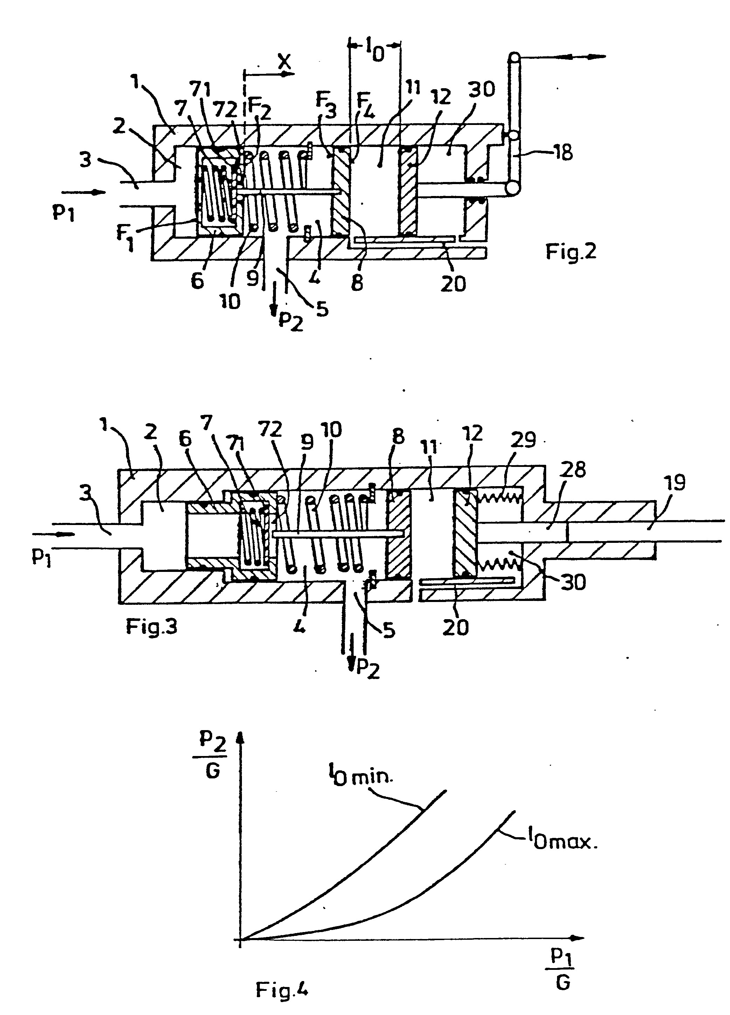

Um die reale Bremskraftverteilung eines Kraftfahrzeuges der idealen Bremskraftverteilung wenigstens anzunähern, ist es z.B. aus der DE-B-1655003, Fig. 3, bekannt und in vielen Kraftfahrzeugen bereits realisiert, Bremsdruckregler (Bremsdruckminderer) mit einer geknickten Kennlinie vorzusehen, wobei der Knickpunkt sich lastabhängig verändert. In Fig. 1 ist die Kennlinie eines derartigen bekannten Bremsdruckreglers gestrichelt angedeutet. Auch bei Einsatz eines solchen bekannten lastabhängigen Bremsdruckreglers ist die reale Bremskraftverteilung von der idealen Bremskraftverteilung noch deutlich entfernt.

Eine im Vergleich dazu bessere Anpassung an die ideale Bremskraftverteilung ermöglichen hydraulische Bremsdruckregler, deren Kennlinienfeld aus einer Schar von geknickten Geraden besteht, deren Steigung und Knickpunkt lastabhängig veränderbar sind. Solche Bremsdruckregler sind z.B. aus der DE-A-2708941 und der DE-A-2923018 bekannt. In Fig. 1 sind die beiden Grenzlinien solcher bekannter Bremsdruckregler, die man auch als Strahlenregler mit lastabhängigem Knickpunkt bezeichnen könnte, strichpunktiert angedeutet. Aber auch diese bekannten hydraulischen Bremsdruckregler mit ihrer degressiven Kennlinie lassen bezüglich ihrer Anpassbarkeit an die ideale Bremskraftverteilung noch erhebliche Wünsche offen. Darüber hinaus sind sie vergleichsweise kompliziert aufgebaut. Der eine bekannte Bremsdruckregler dieser Art (DE-A-2923018) arbeitet z.B. wie bekannte Strahlenregler (DE-A-1780560) nach dem Waagebalkenprinzip, bei dem die wirksamen Hebellängen eines mit zwei Kolbengliedern zusammenwirkenden Waagebalkens in Abhängigkeit von der Fahrzeugbeladung selbsttätig verändert werden. Dieser Bremsdruckregler ist nicht nur mechanisch kompliziert, sondern besitzt auch vergleichsweise grosse Abmessungen.

Ausgehend von einem bekannten hydraulischen Bremsdruckregler der im Oberbegriff des Patentanspruchs 1 genannten Art liegt der Erfindung nun die Aufgabe zugrunde, diesen so auszubilden, dass einerseits sich ein Kennlinienfeld aus einer strahlenförmig angeordneten Schar fahrzeugparameterabhängiger linearer und stetiger Kennlinien ergibt, welches der idealen Bremskraftverteilung möglichst nahe angepasst werden kann, und dass andererseits der dazu erforderliche konstruktive, fertigungstechnische und räumliche Aufwand vergleichsweise gering ist.

Anhand einiger in der Zeichnung dargestellter Ausführungsbeispiele werden die Erfindung und vorteilhafte Ausgestaltungen davon näher erläutert.

In der Zeichnung zeigen in schematisierter Darstellung :

Fig. 1 ein Kennlinienfeld der Bremskraftverteilung eines Kraftfahrzeuges;

Fig. 2 im Längsschnitt ein erstes Ausführungsbeispiel eines Bremsdruckreglers gemäss der Erfindung zum Einbau in den Bremskreis der Vorderachse;

Fig. 3 im Längsschnitt ein zweites Ausführungsbeispiel eines solchen Bremsdruckreglers;

Fig. 4 ein mit den Bremsdruckreglern der Fig. 2 und 3 erzielbares Kennlinienfeld mit dem auf das Fahrzeuggewicht bezogenen Reglerausgangsdruck als Funktion des Reglereingangsdruckes;

Fig. 5 im Längsschnitt ein erstes Ausführungsbeispiel eines Bremsdruckreglers zum Einbau in den Bremskreis der Hinterachse;

Fig. 6 ein zweites Ausführungsbeispiel, und

Fig. 7 ein drittes Ausführungsbeispiel eines solchen Bremsdruckreglers;

Fig. 8 ein mit den Bremsdruckreglern der Fig. 5–7 erzielbares Kennlinienfeld mit dem auf das Fahrzeuggewicht bezogenen Reglerausgangsdruck als Funktion des Reglereingangsdruckes;

Fig. 9 ein Beispiel für eine hydraulische Bremsanlage mit in einem Bremskreis der Vorderachse angeordneten Bremsdruckregler gemäss den Fig. 2 und 3, und

Fig. 10 ein Ausführungsbeispiel einer hydraulischen Bremsanlage mit einem im Bremskreis der Hinterachse angeordneten hydraulischen Bremsdruckregler gemäss den Fig. 5–7.

Der erfindungsgemässe hydraulische Bremsdruckregler besteht aus einem Reglergehäuse 1 mit einer ersten Druckkammer 2 und einer zweiten Druckkammer 4, welche voneinander durch einen axial verschiebbaren ersten Kolben 6 getrennt sind. Die erste Druckkammer 2 weist einen Druckeingang 3 auf, über welchen ein hydraulisches Medium mit einem Eingangsdruck $p_1$ – z.B. von einem Hauptbremszylinder des Kraftfahrzeuges – in die erste Druckkammer eingeleitet wird. In der zweiten Druckkammer 4 ist ein Druckausgang 5 angeordnet, über den das hydraulische Medium mit einem gegenüber dem Eingangsdruck $p_1$ geminderten Ausgangsdruck $p_2$ einem Verbraucher, z.B. bestimmten Radbremszylindern der Bremsanlage zugeführt werden kann.

Im Abstand zum ersten Kolben 6 ist ein zweiter Kolben 8 vorgesehen, welcher unabhängig vom ersten Kolben axial verschiebbar ist und die zweite Druckkammer 4 axial begrenzt. Über ein stangenförmiges Kraftübertragungsglied 9 ist mit diesem zweiten Kolben 8 das mit einer Ventilbohrung 72 zusammenwirkende Ventilglied 71 eines am ersten Kolben 6 angeordneten Regelventils 7 gekoppelt. Durch das Öffnen und Schliessen dieses Regelventiles wird für das hydraulische Druckmedium jeweils eine druck- und strömungsmässige Verbindung vom Druckeingang 3 zum Druckausgang 5 hergestellt bzw. wieder unterbrochen. Das Öffnen und Schliessen des Regelventiles 7 hängt dabei vom axialen Abstand zwischen den beiden Kolben 6 und 8 ab.

Die beiden Kolben 6 und 8 werden jeweils von einer nichthydraulischen Gegenkraft beaufschlagt, die voneinander unabhängig sind. Diese Gegenkräfte sind so gerichtet, dass sie der von Eingangsdruck $p_1$ auf den ersten Kolben 6 ausgeübten Kraft bzw. der vom Ausgangsdruck $p_2$ auf den zweiten Kolben 8 ausgeübten Kraft entgegenwirken, wobei die eine Gegenkraft von einer nichthydraulischen ersten Kraftvorrichtung in Form einer mechanischen Federvorrichtung 10 mit linearer Charakteristik und die zweite Gegenkraft von einer davon unabhängigen nichthydraulischen zweiten Kraftvorrichtung in Form einer pneumatischen Federvorrichtung 11 mit progressiver Charakteristik erzeugt wird. Während die progressive Charakteristik der zweiten Kraftvorrichtung, das heisst der pneumatischen Federvorrichtung 11, in Abhängigkeit von Parametern des Kraftfahrzeuges, insbesondere in Abhängigkeit von der Fahrzeugbeladung veränderbar ist, ist die lineare Charakteristik der ersten Federvorrichtung, der mechanischen Federvorrichtung 10 unveränderbar.

Ein derartig ausgebildeter hydraulischer Bremsdruckregler besitzt ein fahrzeugparameterabhängiges strahlenförmiges Kennlinienfeld (Ausgangsdruck des Reglers als Funktion des Eingangsdruckes), dessen einzelnen Kennlinienstrahlen nichtlinear und völlig stetig verlaufen, so dass es möglich wird, die reale Bremskraftverteilung eines mit einem derartigen hydraulischen Bremsdruckregler ausgerüsteten Fahrzeuges der idealen Bremskraftverteilung sehr genau anzupassen.

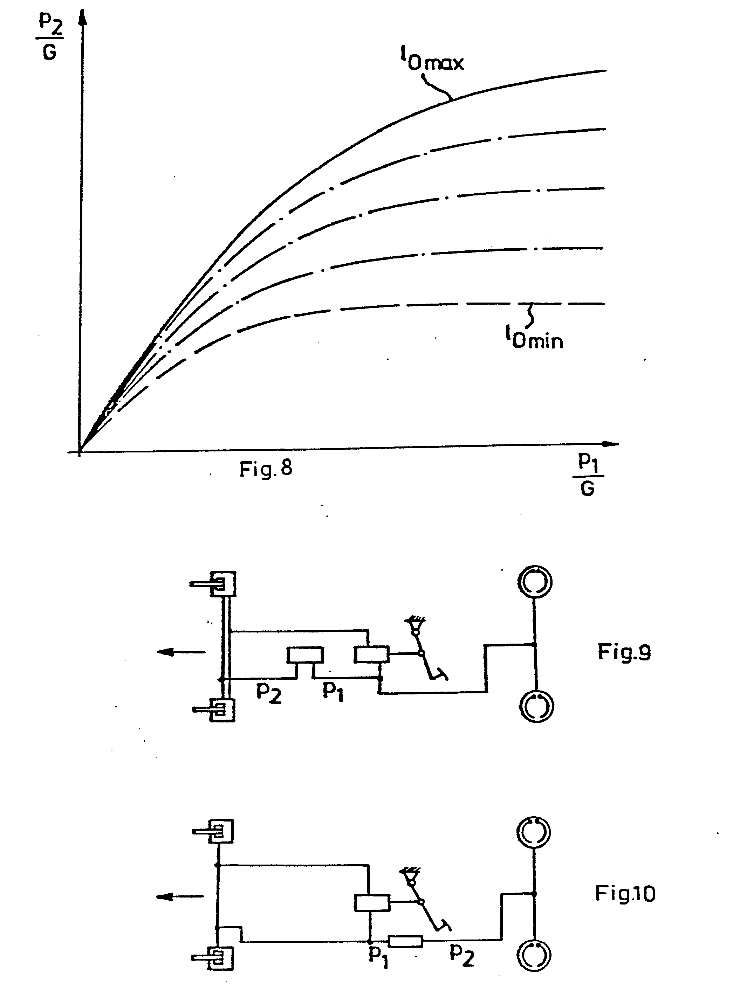

Je nachdem, welche der beiden verschiedenen nichthydraulischen Kraftvorrichtungen mit welchem der beiden Kolben 6 bzw. 8 zusammenwirkt, besitzen die nichtlinearen Kennlinienstrahlen des Kennlinienfeldes (Ausgangsdruck als Funktion des Eingangsdruckes) dabei entweder einen degressiven oder einen progressiven Verlauf. Bremsdruckregler mit degressivem Kennlinienverlauf können dann zur Erzielung der gewünschten, nahezu idealen Bremskraftverteilung in üblicher Weise zwischen den Hauptbremszylinder und die Radbremszylinder der Hinterachse des Kraftfahrzeuges geschaltet werden, wie dies in Fig. 10 schematisch angedeutet ist.

Hydraulische Bremsdruckregler mit progressivem Kennlinienfeld müssen zur Erzielung der nahezu idealen Bremskraftverteilung dagegen zwischen den Hauptbremszylinder und die Radbremszylinder der Vorderachse des Fahrzeuges geschaltet werden, wie dies in Fig. 9 schematisch angedeutet ist. Während die Anordnung gemäss Fig. 10 vorzugsweise bei üblichen Personenkraftfahrzeugen Verwendung finden kann, wird die Anordnung gemäss Fig. 9 vorzugsweise bei Lastkraftfahrzeugen eingesetzt werden, bei denen die Differenz zwischen Vollast und Leerlast besonders gross ist.

In den Fig. 2 und 3 sind zwei Ausführungsbeispiele für Bremsdruckregler dargestellt, mit denen ein Kennlinienfeld mit progressiv verlaufenden Kennlinienstrahlen erzeugt werden kann.

In Fig. 4 ist ein solches progressives Kennlinienfeld dargestellt, wobei Ausgangsdruck $p_2$ sowie Eingangsdruck $p_1$ jeweils auf das Gewicht G des Fahrzeuges bezogen ist und lediglich die beiden Grenzstrahlen «Vollast» sowie «Leerlast + Fahrer» eingezeichnet sind.

Bei diesen beiden Bremsdruckreglern gemäss den Fig. 2 und 3 wirkt die erste Kraftvorrichtung mit linearer Charakteristik, das heisst die mechanische Federvorrichtung 10 mit dem ersten Kolben 6 zusammen, wobei sie in den Ausführungsbeispielen als Druckfeder ausgebildet ist und sich mit ihrem einen Ende an einem nicht näher bezifferten Sprengring und mit ihrem anderen Ende am Boden des Kolbens 6 abstützt.

Die nichthydraulische zweite Kraftvorrichtung mit progressiver Charakteristik, nämlich die pneumatische Federvorrichtung 11 wirkt mit dem zweiten Kolben 8 zusammen. Sie besitzt einen mit einem kompressiblen gasförmigen Medium gefüllten und fahrzeugparameterabhängig, z.B. beladungsabhängig variablen Kompressionsraum. In diesen Ausführungsbeispielen ist der Kompressionsraum der pneumatischen Federvorrichtung 11 als im Reglergehäuse 1 integrierter Zylinderraum ausgebildet, mit einem axial verschiebbaren ersten Zylinderboden 12, dessen axiale Stellung fahrzeugparameterabhängig, z.B. beladungsabhängig verstellbar ist, und mit einem axial verschiebbaren zweiten Zylinderboden, der kraftschlüssig mit einem der beiden Kolben verbunden ist. In den Ausführungsbeispielen gemäss den Fig.

2 und 3 wird dieser axial verschiebbare zweite Zylinderboden des Kompressionsraumes durch den zweiten Kolben 8 selbst gebildet.

Durch bewusstes Verändern der Grösse des Kompressionsraumes der pneumatischen Federvorrichtung 11 kann die wirksame Federkennlinie dieser Federvorrichtung gezielt verändert werden. In Fig. 2 ist diese Möglichkeit schematisch durch ein Gestänge 18 angedeutet, mit dessen Hilfe der erste Zylinderboden 12 nach Bedarf axial weiter nach links oder nach rechts verschoben werden kann, wobei die Art der Verstellkraft für die Erfindung grundsätzlich ohne Bedeutung ist. Sie könnte zum Beispiel mechanisch oder elektrisch erfolgen, insbesondere mit einem rückwirkungsfreien Antrieb über eine Spindel.

Der erste Zylinderboden 12 des Kompressionsraumes kann statt mechanisch oder elektromechanisch auch pneumatisch oder hydraulisch axial verschoben werden, wie dies beispielsweise in den Ausführungsbeispielen gemäss den Fig. 3 sowie 5 und 6 dargestellt ist. Bei diesen Ausführungen besitzt der Bremsdruckregler einen weiteren Druckeingang, nämlich einen Verstelleingang 19, über welchen zur Vergrösserung oder Verkleinerung des Kompressionsraumes 11, d.h. zur axialen Verschiebung des ersten Zylinderbodens 12 ein direkt oder indirekt auf diesen Zylinderboden einwirkende Druckmedium eingeleitet werden kann.

Im Ausführungsbeispiel gemäss Fig. 3 wirkt das über den Verstelleingang 19 zugeführte Druckmedium über die Kolbenstange 28 direkt auf den ersten Zylinderboden 12 ein, und zwar gegen die Kraft einer an diesem Zylinderboden angreifenden Zugfedervorrichtung 29.

Um dem Bremsdruckregler ein gewünschtes fahrzeugbeladungsabhängiges strahlenförmiges Kennlinienfeld zu geben, muss die Grösse des Kompressionsraumes 11, d.h. in den Ausführungsbeispielen der Abstand 10 zwischen den diesen Kompressionsraum stirnseitig begrenzenden Zylinderböden in Abhängigkeit von der Fahrzeugbeladung verändert werden und zwar derart, dass bei Leerlast + Fahrer ein bestimmter Kleinstwert und bei Vollast ein bestimmter Grösstwert vorliegt.

Bei der im Ausführungsbeispiel gemäss Fig. 3 dargestellten Ausführung wird zur Verstellung der axialen Stellung des ersten Zylinderbodens 12 ein Druckmedium verwendet, dessen Druck umgekehrt proportional der Gewichtskraft des Fahrzeuges, d.h. also der Fahrzeugbeladung ist, so dass die auf die Stirnfläche $F_5$ des Kolbens 28 wirkende Verstellkraft bei Vollast kleiner als bei Leerlast + Fahrer ist.

Die in den Fig. 2 und 3 dargestellten hydraulischen Bremsdruckregler stimmen im wesentlichen überein. Lediglich um verschiedene denkbare Ausgestaltungsmöglichkeiten anzudeuten, ist im Ausführungsbeispiel gemäss Fig. 3 abweichend von Fig. 2 der erste Kolben 6 als Stufenkolben ausgebildet und wird der erste Zylinderboden 12 in seiner axialen Stellung nicht mechanisch, sondern hydraulisch verstellt.

Bei nichtbetätigter Bremse, d.h. wenn das Bremssystem drucklos ist, befinden sich die Kolben 6 und 8 sowie der erste Zylinderboden 12 in ihrer dargestellten Ausgangslage. Die als Druckfeder ausgebildete mechanische Federvorrichtung 10 mit linearer Charakteristik ist entspannt. Der zweite Kolben 8 ist axial so positioniert, dass ein im Kompressionsraum 11 beginnender Ausgleichskanal 20 geöffnet ist. Im Ausführungsbeispiel wird als kompressibles gasförmiges Medium Luft verwendet; es ist daher in einfacher Weise möglich, den Ausgleichskanal 20 nach aussen zu führen, so dass der zu diesem Zeitpunkt im Kompressionsraum 11 herrschende Anfangsdruck $P_0$ dem Atmosphärendruck entspricht.

Wenn aus irgendwelchen Gründen ein anderes kompressibles gasförmiges Medium Verwendung finden soll, muss der Ausgleichskanal in sinngemässer Weise zu einem entsprechenden Gasspeicher mit einem definierten Anfangsdruck führen.

Die axiale Stellung des ersten Zylinderbodens 12 ist entsprechend der Fahrzeugbeladung, z.B. also entsprechend dem Niveau der Hinterachse positioniert, und zwar wie oben bereits ausgeführt, derart, dass der zwischen dem zweiten Kolben 8 und dem ersten Zylinderboden 12 gebildete Kompressionsraum 11 bei hoher Beladung gross und bei niedriger Beladung entsprechend klein ist.

Bei dieser Konstellation liegt das Ventilglied 71 des im ersten Kolben 6 angeordneten Regelventils spielfrei an seinem Ventilsitz an, so dass die Ventilbohrung 72 verschlossen ist.

Bei Betätigung des Bremspedals wird im Hauptbremszylinder des Fahrzeuges ein Druck aufgebaut, der als Eingangsdruck $p_1$ am Druckeingang des Bremsdruckreglers wirksam wird und die der ersten Druckkammer 2 zugewandte Kolbenfäche $F_1$ des ersten Kolbens 6 beaufschlagt, wodurch dieser in X-Richtung, d.h. in der Zeichnung nach rechts ausgelenkt wird. Durch diese leichte Auslenkung des ersten Kolbens 6 wird das über das stangenförmige Kraftübertragungsglied 9 mit dem zweiten Kolben 8 gekoppelte Ventilglied 71 des Regelventiles von seinem Ventilsitz abgehoben, so dass das hydraulische Druckmedium durch die Ventilbohrung 72 hindurch in die zweite Druckkammer 4 strömen kann, in der sich ein Druck $p_2$ aufgebaut hat.

Dieser Ausgangsdruck $p_2$ wirkt gleichzeitig auf den ersten Kolben 6 sowie auf den zweiten Kolben 8, wodurch einerseits der erste Kolben 6 etwas in X-Richtung zurückbewegt und andererseits der zweite Kolben 8 in X-Richtung ausgelenkt wird. Dabei legt sich das Ventilglied 71 des Regelventils wieder auf seinen Ventilsitz an und andererseits wird die im Kompressionsraum 11 mündende Öffnung des Ausgleichskanals 20 durch den zweiten Kolben verschlossen, wodurch der Kompressionsraum als pneumatische Federvorrichtung mit progressiver Charakteristik wirksam werden kann.

Die Auslenkung der beiden sich grundsätzlich unabhängig voneinander bewegten Kolben 6 und 8 findet so lange statt, bis sich beide im Kräftegleichgewicht befinden, bei dem das Regelventil 7 geschlossen ist und beide Kolben gleichweite Wege zurückgelegt haben. Dieser Gleichgewichtszustand wird durch die an den beiden Kolben 6 und 8 wirksamen Druck- und Federkräfte bestimmt.

Im stationären Gleichgewichtszustand des Bremsdruckreglers gilt:

1) $p_1 \cdot F_1 - p_2 \cdot F_2 - k \cdot X = 0$ und

2) $p_2 \cdot F_3 - p_i \cdot F_4 = 0$

In diesen Gleichungen bedeuten:
$p_1$ Eingangsdruck des Bremsdruckreglers
$p_2$ Ausgangsdruck des Bremsdruckreglers
$p_i$ Druck im Kompressionsraum 11 bei Kompression seines kompressiblen gasförmigen Mediums
$F_1$ der ersten Druckkammer 2 zugewandte wirksame Kolbenfläche des ersten Kolbens 6
$F_2$ der zweiten Druckkammer 4 zugewandte wirksame Kolbenfläche des ersten Kolbens 6
$F_3$ der zweiten Druckkammer zugewandte wirksame Kolbenfläche des zweiten Kolbens 8
$F_4$ dem Kompressionsraum 11 zugewandte wirksame Kolbenfläche des zweiten Kolbens 8 (zweiter Zylinderboden)
k Federkonstante der mechanischen Federvorrichtung 10, und
X Verschiebung des ersten Kolbens 6.

Sobald die Öffnung des im Kompressionsraum 11 mündenden Ausgleichskanals 20 durch den zweiten Kolben 8 verschlossen ist, wird das in diesem Raum befindliche gasförmige Medium bei einer weiteren Auslenkung des zweiten Kolbens 8 in X-Richtung komprimiert. Nimmt man für diese Kompression eine polytrope Zustandsänderung an, dann erfolgt die Kompression nach der Gleichung

3) $\dfrac{p_i}{p_0} = \left(\dfrac{V_0}{V_i}\right)^n$ , woraus sich ergibt

$p_i = p_0 \left(\dfrac{1_0}{1_0 - X}\right)^n$

In dieser Gleichung bedeuten u.a.:
$p_0$ Anfangsdruck, insbesondere Atmosphärendruck, im Kompressionsraum 11 vor der Kompression
$V_0$ Anfangsvolumen des Kompressionsraumes
$V_i$ Volumen des Kompressionsraumes 11 nach Kompression
$1_0$ axiale Anfangslänge des Kompressionsraumes (Abstand des zweiten Kolbens 8 vom ersten Zylinderboden 12)
n Polytropen-Exponent.

Aus den Gleichungen 1 und 2 ergibt sich unter Verwendung des Ausdruckes für $p_1$ für den Bremsdruckregler letztlich folgende Gleichung:

4) $p_1 \cdot F_1 - k \cdot 1_0 \left(1 - \dfrac{p_0 \cdot F_4}{p_2 \cdot F_3}\right)^{1/n} - p_2 \cdot F_2 = 0$

Mit $1_0$ als variablem Parameter ergibt sich aus dieser Gleichung für den in den Fig. 2 und 3 dargestellten Bremsdruckregler ein Kennlinienfeld wie es tendenziell in Fig. 4 dargestellt ist. Durch entsprechende, unter Umständen auch unterschiedliche Bemessung der verschiedenen Kolbenflächen $F_1$ bis $F_4$ (z. B. Stufenkolben und Stufenzylinder), der Federkonstanten k der mechanischen Federvorrichtung 10, und eventuell durch Verwendung eines Systemvordruckes $p_0 >$ $p_{Atmosphäre}$ – eventuell in Verbindung mit einer Federvorspannung – lassen sich alle möglichen gekrümmten Kennlinien mit der gezeichneten Krümmungstendenz sowie alle möglichen quasilinearen Kennlinien mit $1_0$ als Variationparameter erzielen. Selbstverständlich wird die Reglercharakteristik auch durch den Polytropen Exponenten, n, d.h. durch die Art des verwendeten kompressiblen gasförmigen Mediums beeinflusst. Wegen der progressiven Charakteristik der durch den Kompressionsraum 11 gebildeten pneumatischen Federvorrichtung wächst der Weg des zweiten Kolbens 2 nicht linear mit dem Ausgangsdruck $p_2$. Das hat wiederum zur Folge, dass der Ausgangsdruck $p_2$ eine nichtlineare Funktion des Eingangsdruckes $p_1$ ist. Je nach der Grösse des Anfangsvolumens $V_0$ bzw. der axialen Anfangslänge $1_0$ des Kompressionsraumes 11 wird wegen der festen Wegebindung zwischen dem ersten Kolben 6 und dem zweiten Kolben 8 das Verhältnis zwischen der linear wachsenden Federkraft $k \cdot X$ der mechanischen Federvorrichtung 10, die den ersten Kolben 6 beaufschlagt, und der progressiv wachsenden Druckkraft $p_i \cdot F_4$ der pneumatischen Federvorrichtung 11 verändert, so dass $1_0$ die massgebliche Grösse für die jeweilige Anfangssteigung des Ausgangsdruckes $p_2$ im Kennlinienfeld gemäss Fig. 4 ist. Wenn die Anfangslänge $1_0$ bzw. das Anfangsvolumen $V_0$ des Kompressionsraumes 11 – wie eingangs bereits erläutert – in Abhängigkeit von der Fahrzeugbeladung variiert wird, ergibt sich ein strahlenförmiges Kennlinienfeld mit stetigen und nichtlinearen Kennlinienstrahlen sowie der Fahrzeugbeladung als variablen Parameter. Da der Verlauf, d.h. die Krümmung der Kennlinienstrahlen durch die Bemessung der verschiedenen Reglerkolben und Federvorrichtungen bestimmt werden kann, kann das Kennlinienfeld des Bremsdruckreglers der gewünschten idealen Bremskraftverteilung sehr genau angenähert werden.

Die axiale Verschiebung des ersten Zylinderbodens 12 zur Veränderung des Wertes $V_0$ bzw. $1_0$ wird zweckmässigerweise bei nicht betätigter Bremse durchgeführt, wenn also der Ausgangsdruck $p_2 = 0$ ist und insbesondere der zweite Kolben 8 seine in den Figuren gezeigte Anfangslage ($X = 0$) einnimmt, in dem die im Kompressionsraum 11 mündende Öffnung des Ausgleichskanals 20 noch geöffnet ist. Durch die dann vorliegende druckmässige Verbindung zwischen dem Kompressionsraum 11 und der Kammer 30 wird eine rückwirkungsfreie Verstellung des ersten Zylinderbodens 12 ermöglicht. Es ist natürlich auch möglich, den ersten Zylinderboden 12 während eines Bremsvorganges ($X > 0$) zu verstellen. Das ist jedoch mit einem höheren Kraftaufwand verbunden, so dass es dann ratsam ist, die Wegeübertragung auf den ersten Zylinderboden 12 selbsthemmend auszuführen.

Die Gleichungen 1 bis 4 wurden in erster Linie aufgestellt, um deutlich zu machen, dass sich infolge der Verwendung der pneumatischen Federvorrichtung 11 mit progressiver Charakteristik zwischen dem Eingangsdruck $p_1$ und dem Ausgangsdruck $p_2$ eine stetige, jedoch nichtlineare Abhängigkeit ergibt. Die Gleichungen selbst gelten jedoch nur in erster Annäherung, da z. B. die wirksamen Flächen des Regelventils nicht weiter berücksichtigt worden sind. Wie genauere Rechnungen zeigen, ist es zur Funktionsfähigkeit des Bremsdruckreglers jedoch erforderlich, dass die wirksame Fläche $F_3$ des zweiten Kolbens 8 (bzw. bei abgewandelten Ausführungen eine entsprechende Fläche) grösser sein muss als die wirksame Ventilfläche des Regelventils 7, damit dieses – nachdem es geöffnet hatte – wieder schliessen kann.

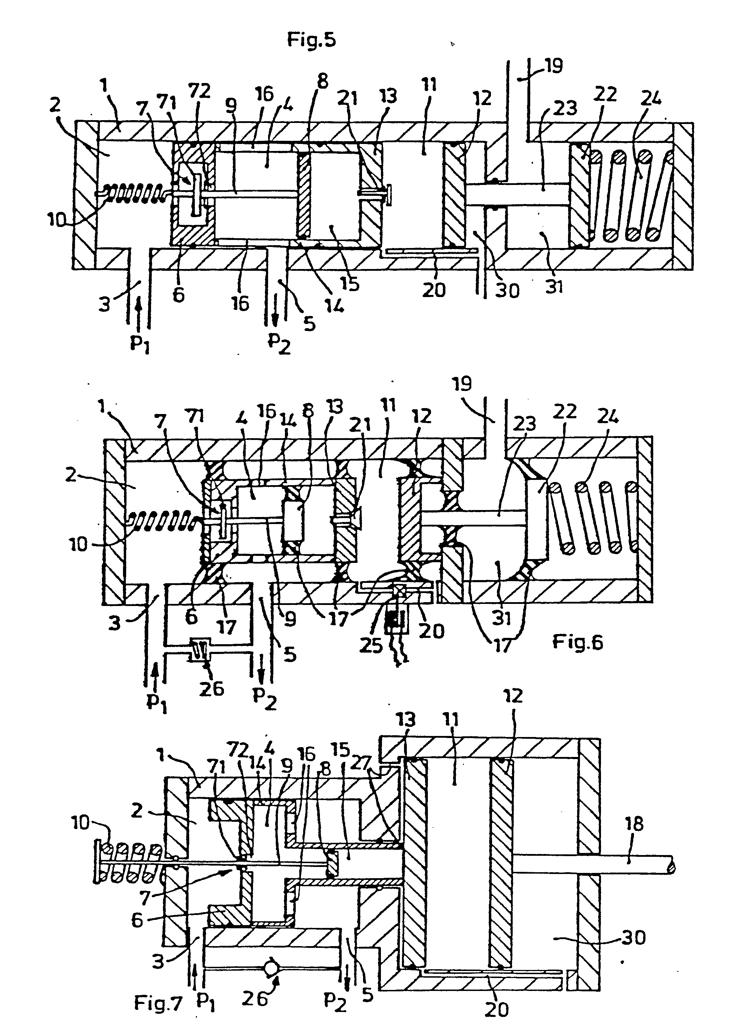

In den Fig. 5 bis 7 sind demgegenüber drei Ausführungsbeispiele für Bremsdruckregler dargestellt, mit denen ein Kennlinienfeld mit degressiv verlaufenden Kennlinienstrahlen erzeugt werden kann, wobei eine bevorzugte Ausführung in Fig. 7 gezeigt ist.

Ein mit diesen Bremsdruckreglern erzeugbares degressives Kennlinienfeld ist in Fig. 8 dargestellt, wobei die voll ausgezogene Linie die bei «Vollast» geltende Kennlinie, die gestrichelte Linie die bei «Leerlast + Fahrer» geltende Kennlinie und die dazwischen befindlichen strichpunktierten Linien Kennlinien darstellen, welche für zwischen Vollast und Leerlast liegende Belastungen des Fahrzeuges gelten.

Bei diesen drei Ausführungsbeispielen greift – abweichend von den Ausführungsbeispielen gemäss den Fig. 2 und 3 – die nichthydraulische erste Kraftvorrichtung mit linearer Charakteristik, d.h. die mechanische Federvorrichtung 10, nicht am ersten Kolben 6, sondern am zweiten Kolben 8 an und in entsprechender Weise beaufschlagt die nichthydraulische zweite Kraftvorrichtung mit progressiver Charakteristik, d.h. die pneumatische Federvorrichtung 11, statt den zweiten Kolben den ersten Kolben 6.

Ansonsten stimmen diese Bremsdruckregler jedoch in ihrem Aufbau und bezüglich ihrer Funktionsweise im wesentlichen mit denen der Fig. 2 und 3 überein.

Gleiche Elemente sind daher mit den gleichen Bezugsziffern versehen. Ein grundsätzlicher Unterschied zu den Ausführungen gemäss den Fig. 2 und 3 besteht jedoch darin, dass die nichthydraulische erste Kraftvorrichtung mit linearer Charakteristik, d.h. die mechanische Federvorrichtung 10 den zweiten Kolben 8 und die nichthydraulische zweite Kraftvorrichtung mit progressiver Charakteristik, nämlich die pneumatische Federvorrichtung mit dem Kompressionsraum 11 den ersten Kolben 6 beaufschlagt. Auch hierbei ist der Kompressionsraum 11 der pneumatischen Federvorrichtung als Zylinderraum mit einem axial verschiebbaren ersten Zylinderboden 12 ausgebildet, dessen axiale Stellung fahrzeugparameterabhängig, insbesondere in Abhängigkeit von der Beladung des Fahrzeuges, verstellbar ist. Im Gegensatz zu den Ausführungen gemäss den Fig. 2 und 3 wird der Zylinderraum auf der dem ersten Zylinderboden 12 axial gegenüberliegenden Seite nicht durch den zweiten Kolben 8 selbst, sondern durch einen axial verschiebbaren zweiten Zylinderboden 13 begrenzt, welcher kraftschlüssig mit dem ersten Kolben 6 verbunden ist. Zu diesem Zweck besitzt er einen vom Kompressionsraum 11 wegweisenden zylindrischen Fortsatz 14, der mit seinem freien Ende am ersten Kolben 6 anliegt und einen Führungszylinder 15 bildet, in dem der zweite Kolben 6 axial verschiebbar gelagert ist. In der zylindrischen Wandung des Fortsatzes 14 sind Durchbrüche 16 vorgesehen, über die eine ständige Verbindung zwischen der zweiten Druckkammer 4 und dem Druckausgang 5 gewährleistet ist.

Bei Betätigung des Bremspedals beaufschlagt der vom Hauptbremszylinder des Kraftfahrzeuges erzeugte und in der ersten Druckkammer 2 des Bremsdruckreglers wirksame Eingangsdruck $p_1$ den ersten Kolben 6, wodurch dieser in X-Richtung ausgelenkt wird. Hierdurch hebt das Ventilglied 71 des Regelventils 7 von seinem Ventilsitz ab, so dass die Ventilbohrung 72 frei wird und das hydraulische Druckmedium in die zweite Druckkammer 4 strömt, wodurch sich dort ein Ausgangsdruck $p_2$ aufbaut. Durch die Auslenkung des ersten Kolbens 6 in X-Richtung wird gleichzeitig auch der über seinen zylindrischen Fortsatz 14 an diesem anliegende zweite Zylinderboden 13 um die gleiche Wegstrecke in X-Richtung verschoben, wodurch die im Kompressionsraum 11 mündende Öffnung des Ausgleichskanals 20 verschlossen wird. Entsprechend der Verlagerung des zweiten Zylinderbodens 13 wird das Volumen des Kompressionsraumes 11 um den Faktor $(1_0 - X)$ verringert, wodurch sich der Druck in der Kompressionskammer entsprechend der Polytropen-Gleichung von seinem Anfangsdruck $p_0$ auf

$$p_i = p_0 \cdot \frac{V_0}{V_i} \, n$$

$$= p_0 \cdot \frac{1_0}{1_0 - X} \, n$$

erhöht.

Der mit der Auslenkung des zweiten Zylinderbodens 13 progressiv ansteigende Druck übt auf den zweiten Zylinderboden eine progressiv ansteigende Gegenkraft $p_i \cdot F_4$ aus, wobei $F_4$ die wirksame Fläche des zweiten Zylinderbodens ist. Im Gegensatz zu den Ausführungsbeispielen der Fig. 2 und 3 greift am ersten Kolben 6 also keine federbedingte lineare Gegenkraft, sondern eine federbedingte progressive Gegenkraft an.

Das Ventilglied 71 im ersten Kolben 6 steht über das stangenförmige Kraftübertragungsglied 9 mit dem zweiten Kolben 8, welcher im Führungszylinder 15 geführt wird, in fester Verbindung. Da der zweite Kolben 8 unter der Wirkung der auf ihn einwirkenden Druckkraft $p_2 \cdot F_3$ gegen die Kraft der mechanischen Federvorrichtung 10 ebenfalls in X-Richtung ausgelenkt wird, wird die Ventilbohrung 72 schliesslich wieder durch das Ventilglied 71 verschlossen.

Im Gleichgewichtszustand sind beide Kolben 6 und 8 gleichweit ausgelenkt und das Regelventil 7 verschlossen. Für die beiden Kolben 6 und 8 gelten dann folgende Kräftegleichungen:

Kolben 6: 5) $p_1 \cdot F_1 - p_2 \cdot F_2 - p = 0$, wobei annähernd gilt $p = p_i \cdot F_4 - p_0 \cdot F_4$.

Unter Berücksichtigung, dass bei polytroper Zustandsänderung im Kompressionsraum 11

$$p = F_4 \left[ p_0 \left( \frac{1_0}{1_0 - X} \right)^n - p_0 \right] \text{ ist,}$$

ergibt sich

$$6) \; p_1 \cdot F_1 - p_2 \cdot F_2 - F_4 \left[ p_0 \left( \frac{1_0}{1_0 - X} \right)^n - p_0 \right] = 0.$$

In entsprechender Weise gilt für den zweiten Kolben 8:

$$7) \; p_2 \cdot F_3 - k \cdot X - p_0 \cdot F_3 = 0$$

Da im Gleichgewichtszustand beide Kolben 6 und 8 gleichweit ausgelenkt sind, ist der Weg X in den Gleichungen 6 und 7 gleich gross. Daraus ergibt sich für den Zusammenhang zwischen Eingangsdruck $p_1$ und dem Ausgangsdruck $p_2$ die Gleichung

$$8) \; p_1 \cdot F_1 - p_2 \cdot F_2 - F_4 \left[ p_0 \left( \frac{1}{1 - \dfrac{p_2 \cdot F_3 - p_0 \cdot F_3}{k \cdot 1_0}} \right)^n - p_0 \right] = 0$$

Da der in Gleichung 8 beschriebene Bremsdruckregler technisch nur sinnvoll ist, wenn der Nenner des in runden Klammern stehenden Ausdruckes positiv ist, ergibt sich als grösstmöglicher Ausgangsdruck des Bremsdruckreglers der Wert

$$p_{2 \, max} = \frac{k \cdot 1_0}{F_3} + p_0$$

Auch die Gleichungen 5 bis 8 gelten nur in erster Annäherung, da einige Vereinfachungen vorgenommen worden sind. Unter anderem wurde angenommen, dass der im Führungszylinder 15 herrschende Anfangsdruck $p_0$ auch beim Eintauchen des zweiten Kolbens 8 seinen Wert beibehält und dem Atmosphärendruck entspricht. Wenn die mechanische Federvorrichtung 10 eine grosse Federkonstante k besitzt, kann diese Annahme ohne weiteres als gültig angesehen werden. Falls die Federkonstante k jedoch vergleichsweise klein ist und deshalb das Produkt $k \cdot X$ nicht in jedem Falle viel grösser ist als das Produkt $p_i \cdot F_4$, muss dafür gesorgt werden, dass der Führungszylinder 15 eine Verbindung nach aussen besitzt, oder aber die Reglercharakteristik ändert sich etwas. Falls eine solche Ausgleichsverbindung nicht vorgesehen ist – wie in den Fig. 5 und 6 –, dann ist es von Vorteil im Boden des zweiten Zylinderbodens 13 ein Rückschlagventil 21 anzuordnen, über welches bei nicht betätigter Bremse ein im Führungszylinder eventuell vorhandener Überdruck gegen den Kompressionsraum 11 abgebaut werden kann.

Durch entsprechende Bemessung der verschiedenen Reglerparameter lässt sich das Kennlinienfeld dieses Bremsdruckreglers innerhalb eines sehr weiten Bereiches festlegen, wobei die in Fig. 8 vergleichsweise stark gekrümmten Kennlinienstrahlen im Grenzfalle quasilinear sind. Es ist daher mit dem erfindungsgemässen Bremsdruckregler in einfacher Weise ein Kennlinienfeld zu erzielen, welches der idealen Bremskraftverteilung entsprechend Fig. 1 sehr nahe kommt.

Wie bei den Ausführungsbeispielen gemäss den Fig. 2 und 3 ist die Grösse des Kompressionsraumes 11 variabel, insbesondere in Abhängigkeit von der Fahrzeugbelastung. Die axiale Anfangslänge $l_0$ dieses Raumes wird wiederum durch axiales Verschieben des ersten Zylinderbodens 12 eingestellt, der im gezeigten Ausführungsbeispiel über eine Koppelstange 23 mit einem innerhalb eines Hilfszylinders 31 angeordneten Hilfskolben 22 verbunden ist. Dieser wird innerhalb des Hilfszylinders 31 unter der Einwirkung eines über den Verstelleingang 19 zugeführten Druckmediums gegen die Wirkung einer Federvorrichtung 24 axial verschoben. Wenn der Druck im Hilfszylinder 31 der Fahrzeugbelastung proportional gemacht wird, wird der zweite Zylinderboden 12 axial jeweils so verschoben, dass die Grösse von $l_0$ der jeweiligen Fahrzeugbeladung proportional ist.

Wie aus den Fig. 2 bis 6 leicht zu erkennen ist, ist der Regelvorgang jeweils mit einer Volumenvergrösserung des hydraulisches Druckmedium aufnehmenden Raumes verbunden. Dieser Volumenzuwachs beträgt

$$\Delta V = x \cdot F_3$$

und wird klein, wenn entweder der Verschiebeweg x oder aber die wirksame Fläche $F_3$ des zweiten Kolbens 8 kleingehalten wird. Generell wird der Verschiebeweg x um so kleiner, je kleiner einerseits die wirksame Fläche $F_3$ und je grösser die Federkonstante k der mechanischen Federvorrichtung 10 gemacht wird; und generell wird der erreichbare höchste Ausgangsdruck $p_2$ um so grösser, je grösser die Federkonstante k und je kleiner die wirksame Fläche $F_3$ bemessen werden. Es ist daher von Vorteil, die Federkonstante k gross und die wirksame Fläche $F_3$ klein zu machen, wodurch der Bremsdruckregler so miniaturisiert wird, dass der «schädliche Hydraulikraum» $x \cdot F_3$ gegenüber den sowieso im Bremskreis vorhandenen Elastizitäten praktisch nicht mehr spürbar ist.

Im Ausführungsbeispiel gemäss Fig. 7 ist ein in dieser Weise abgewandelter Bremsdruckregler dargestellt. Bei diesem ist der Innendurchmesser des Führungszylinders 15 in dem Bereich, in dem der zweite Kolben 8 gelagert ist, spürbar kleiner bemessen als der Durchmesser der den ersten Kolben 6 aufnehmenden ersten Druckkammer 2. Der «schädliche Hydraulikraum» $\Delta V = x \cdot F_3$ ist bei dieser Ausführungsvariante somit vergleichsweise klein.

Wenn bei einer optimalen Bremsdruckreglerauslegung der Verschiebeweg x so klein wird, dass die im Kompressionsraum 11 mündende Öffnung des Ausgleichskanales 20 nicht mehr mit Sicherheit ausreichend geschlossen werden kann, dann ist es zweckmässig, innerhalb dieses Ausgleichskanales, z.B. ein elektromagnetisches Ventil o.ä. vorzusehen, wie dies im Ausführungsbeispiel gemäss Fig. 6 angedeutet und mit 25 beziffert ist. Ein solches Ventil kann z.B. mit Schliessen des üblichen Bremslichtkontaktes oder auch bei Überschreiten eines bestimmten, vergleichsweise geringen Druckes im Bremskreis betätigt werden. Der Vollständigkeit halber ist im Ausführungsbeispiel gemäss Fig. 7 noch ein weiterer Ausgleichskanal 27 angedeutet, durch welchen der Führungszylinder 15 mit der Aussenatmosphäre in Verbindung steht, so dass ein besonderes Rückschlagventil im zweiten Zylinderboden 13 – wie in den Fig. 5 und 6 – nicht erforderlich ist. Vorgesehen ist weiterhin ein zwischen dem Druckeingang 3 und dem Druckausgang 5 liegendes Rückschlagventil 26, durch welches gewährleistet ist, dass der Druck am Druckausgang 5 nie grösser werden kann als am Druckeingang 3.

Wie im Ausführungsbeispiel gemäss Fig. 6 gezeigt ist, ist es auch möglich, im Prinzip alle Dichtungen entfallen zu lassen, wenn die abzudichtenden Kolben, Kolbenstangen und Zylinderböden usw. in axial federnden Membranen 17 aufgehängt werden. Die Funktion dieses Bremsdruckreglers ist die gleiche wie die des in Fig. 5 dargestellten Bremsdruckreglers. Bei dieser Ausführung ist das eingezeichnete Magnetventil 25 in jedem Falle erforderlich.

Nicht dargestellt ist in den einzelnen Figuren, dass es auch möglich ist, den Grund- oder Anfangsdruck $p_0$ des Kompressionsraumes 11 nicht unter einen bestimmten Wert absinken zu lassen, wodurch die Regelcharakteristik des Bremsdruckreglers sehr stark beeinflusst werden kann.

## Patentansprüche

1. Hydraulischer Bremsdruckregler mit nichtlinear und stetig verlaufender Kennlinie für die hydraulische Bremsanlage eines Kraftfahrzeuges, mit einer einen Druckeingang (3) aufweisenden ersten Druckkammer (2) und einer einen Druckausgang (5) aufweisenden zweiten Druckkammer (4), die durch einen axial verschiebbaren ersten Kolben (6) voneinander getrennt sind, der ein Regelventil (7) trägt, durch dessen Öffnen und Schliessen zwischen erster und zweiter Druckkammer (2, 4) eine druck- und strömungsmässige Verbindung für das hydraulische Druckmedium herstellbar und wieder unterbrechbar ist, und mit einem die zweite Druckkammer (4) axial begrenzenden, unabhängig vom ersten Kolben (6) axial verschiebbaren zweiten Kolben (8), der über ein Kraftübertragungsglied (9) derart mit dem Ventilglied (71) des Regelventils (7) gekoppelt ist, dass das Öffnen und Schliessen des Regelventils (7) vom axialen gegenseitigen Abstand der beiden Kolben (6, 8) abhängig ist, wobei eine nichthydraulische erste Kraftvorrichtung (mechanische Federvorrichtung 10) mit linearer Charakteristik und eine davon unabhängige nichthydraulische zweite Kraftvorrichtung (11) mit progressiver Charakteristik vorgesehen sind, von denen die eine in einem dem Eingangsdruck ($p_1$) entgegenwirkenden Sinn am ersten Kolben (6) und die andere in gleicher Wirkrichtung am zweiten Kolben (8) angreift, dadurch gekennzeichnet, dass die nichthydraulische zweite Kraftvorrichtung als pneumatische Federvorrichtung mit einem mit einem kompressiblen gasförmigen Medium gefüllten und fahrzeugparameterabhängig variablen Kompressionsraum (11) ausgebildet ist.

2. Hydraulischer Bremsdruckregler nach Anspruch 1, zur Zwischenschaltung zwischen den Hauptbremszylinder und die Radbremszylinder der Hinterachse, dadurch gekennzeichnet, dass in an sich bekannter Weise die nichthydraulische erste Kraftvorrichtung (10) am zweiten Kolben (8) und die nichthydraulische zweite Kraftvorrichtung (11) am ersten Kolben (6) angreift.

3. Hydraulischer Bremsdruckregler nach Anspruch 1, zur Zwischenschaltung zwischen den Hauptbremszylinder und die Radbremszylinder der Vorderachse, dadurch gekennzeichnet, dass in an sich bekannter Weise die nichthydraulische erste Kraftvorrichtung (10) am ersten Kolben (6) und die nichthydraulische zweite Kraftvorrichtung (11) am zweiten Kolben (8) angreift.

4. Hydraulischer Bremsdruckregler nach einem der Ansprüche 1 bis 3, dadurch gekennzeichnet, dass die Grösse des Kompressionsraumes (11) der pneumatischen Federvorrichtung fahrzeugbeladungsabhängig veränderbar ist, derart, dass bei Leerlast ein Kleinstwert und bei Vollast ein Grösstwert vorliegt.

5. Hydraulischer Bremsdruckregler nach einem der Ansprüche 1 bis 4, dadurch gekennzeichnet, dass der Kompressionsraum 11 als Zylinderraum ausgebildet ist, mit einem axial verschiebbaren ersten Zylinderboden (12), dessen axiale Stellung fahrzeugparameterabhängig verstellbar ist, und mit einem axial verschiebbaren zweiten Zylinderboden (8 bzw. 13), der kraftschlüssig mit einem der beiden Kolben (6, 8) verbunden ist.

6. Hydraulischer Bremsdruckregler nach den Ansprüchen 2 und 5, dadurch gekennzeichnet, dass der axial verschiebbare zweite Zylinderboden (13) einen vom Kompressionsraum (11) wegweisenden zylindrischen Fortsatz (14) trägt, der stirnseitig am ersten Kolben (6) anliegt und einen ·Führungszylinder (15) für den zweiten Kolben (6) bildet, wobei in der Wandung des zylindrischen Fortsatzes (14) Durchbrüche (16) vorgesehen sind, über die eine ständige Verbindung zwischen zweiter Druckkammer (4) und Druckausgang (5) gewährleistet ist.

7. Hydraulischer Bremsdruckregler nach Anspruch 6, dadurch gekennzeichnet, dass der Innendurchmesser des Führungszylinders (15) zumindest in dem Bereich, in dem der zweite Kolben (8) gelagert ist, spürbar kleiner ist als der Durchmesser der den ersten Kolben (6) aufnehmenden ersten Druckkammer (2).

8. Hydraulischer Bremsdruckregler nach Anspruch 3 und 5, dadurch gekennzeichnet, dass der axial verschiebbare zweite Zylinderboden des Kompressionsraumes (11) durch den zweiten Kolben (8) selbst gebildet wird.

9. Hydraulischer Bremsdruckregler nach einem der Ansprüche 1 bis 8, dadurch gekennzeichnet, dass zumindest ein Teil der axial verschiebbaren Kolben, Kolbenstangen und Zylinderböden usw. in axial federnden Membranen (17) aufgehängt sind, die neben ihrer Lagerfunktion gleichzeitig Dichtungs- bzw. Trennfunktionen übernehmen.

**Claims**

1. A hydraulic brake pressure regulator having a non-linear and continuously running characteristic for the hydraulic brake system of a motor vehicle, having a first pressure chamber (2) with a pressure inlet (3) and a second pressure chamber (4) with a pressure outlet (5) which are separated from one another by an axially displaceable first piston (6) which carries a regulating valve (7), the opening and closing of which allows a pressure and flow connection for the pressure medium to be set up and shut off between the first and second pressure chambers (2, 4), and having a second piston (8) which is axially displaceable independently of the first piston (6), which axially defines the second pressure chamber (4), and which is connected by way of a force-transmission element (9) to have valve member (71) of the regulating valve (7) in such a way that the opening and closing of the regulating valve (7) is dependent on the axial mutual distance between the two pistons (6, 8), wherein a non-hydraulic force device (mechanical spring device 10) having a linear characteristic and a non-hydraulic second force device (11) having a progressive characteristic and being independent of the first force device are provided, one of which acts and the first piston (6) in the sense opposing the inlet pressure ($p_1$) and the other of which acts on the second piston (8) in the same direction, characterised in that the non-hydraulic second force device is in the form of a pneumatic spring device having a compression chamber (11) filled with a compressible, gaseous medium and variable in dependence upon motor vehicle parameters.

2. A hydraulic brake pressure regulator as claimed in claim 1, to be interposed between the brake master cylinder and the wheel brake cylinders of the rear axle, characterised in that the non-hydraulic first force device (10) acts on the second piston (8) and the non-hydraulic second force device (11) acts on the first piston (6) in a known manner.

3. A hydraulic brake pressure regulator as claimed in claim 1, to be interposed between the brake master cylinder and the wheel brake cylinders of the front axle, characterised in that the non-hydraulic first force device (10) acts on the first piston (6) and the non-hydraulic second force device (11) acts on the second piston (8) in a known manner.

4. A hydraulic brake pressure regulator as claimed in any one of claims 1 to 3, characterised in that the size of the compression chamber (11) of the pneumatic spring device can be altered in dependence on vehicle loading in such a way that, for no load, a minimum value is present, and, for full load, a maximum value is present.

5. A hydraulic brake pressure regulator as claimed in any one of claims 1 to 4, characterised in that the compression chamber (11) is in the form of a cylinder chamber having an axially displaceable first cylinder bottom (12) whose axial position is adjustable in dependence upon motor vehicle parameters, and having an axially displaceable second cylinder bottom (8 or 13) which is frictionally connected to one of the two pistons (6, 8).

6. A hydraulic brake pressure regulator as claimed in claims 2 and 5, characterised in that the axially displaceable second cylinder bottom (13) carries a cylindrical extension (14) pointing away from the compression chamber (11) and which abuts against the first piston (6) on the end face and forms a guide cylinder (15) for the second piston (6), wherein openings (16) are provided in the wall of the cylindrical extension (14) which ensure a permanent connection between the second pressure chamber (4) and the pressure outlet (5).

7. A hydraulic brake pressure regulator as claimed in claim 6, characterised in that, at least in the region in which the second piston (8) is supported, the inner diameter of the guide cylinder (15) is noticeably smaller than the diameter of the first pressure chamber (2) accommodating the first piston (6).

8. A hydraulic brake pressure regulator as claimed in claim 3 and claim 5, characterised in that the axially displaceable second cylinder bottom of the compression chamber (11) is formed by the second piston (8) itself.

9. A hydraulic brake pressure regulator as claimed in any one of claims 1 to 8, characterised in that at least a part of the axially displaceable pistons, piston rods and cylinder bottoms etc., are suspended in axially resilient diaphragms (17), which, apart from functioning as bearings, also function in a sealing and separating manner.

**Revendications**

1. Régulateur hydraulique de pression de freinage, dont la courbe caractéristique est non linéaire et progressive, destiné au système hydraulique de freinage d'une automobile, comportant une première chambre (2) de pression munie d'un canal d'admission (3) de fluide sous pression, ainsi qu'une deuxième chambre (4) de pression munie d'un canal de décharge (5), séparées l'une de l'autre par un premier piston (6) mobile axialement et muni d'un clapet régulateur (7) dont l'ouverture et la fermeture permettent d'établir et de couper une communication autorisant le passage du flux de fluide hydraulique sous pression entre la première et la deuxième chambre de pression (2, 4), comprenant ensuite un deuxième piston (8) mobile axialement indépendamment du premier piston (6), délimitant axialement la deuxième chambre (4) de pression et relié, par l'intermédiaire d'un élément (9) de transmission des forces, à l'élément valve (71) du clapet régulateur (7) de telle manière que l'ouverture et la fermeture du clapet régulateur (7) dépendent de la distance axiale relative entre les deux pistons (6, 8), un premier dispositif non hydraulique d'assistance (dispositif mécanique 10 à ressort), dont la courbe caractéristique est linéaire, ainsi qu'un deuxième dispositif non hydraulique d'assistance (11), indépendant du premier dispositif, et dont la courbe caractéristique est progressive, étant prévus dans ce système, l'un des deux agissant sur le premier piston (6) dans un sens contraire à celui de la pression d'entrée ($p_1$) et l'autre agissant sur le deuxième piston (8) dans le même sens que la pression, caractérisé par le fait que le deuxième dispositif non hydraulique d'assistance est réalisé sous forme d'un dispositif à ressort pneumatique comportant une chambre (11) de compression, remplie d'un fluide gazeux compressible et variable en fonction des paramètres du véhicule.

2. Régulateur hydraulique de pression de freinage selon la revendication 1, destiné à être interposé entre le maître-cylindre de frein et les cylindres de roue de l'essieu arrière, caractérisé par le fait que le premier dispositif non hydraulique (10) d'assistance agit, de manière globalement connue, sur le deuxième piston (8), et que le deuxième dispositif non hydraulique (11) d'assistance agit sur le premier piston (6).

3. Régulateur hydraulique de pression de freinage selon la revendication 1, destiné à être interposé entre le maître-cylindre de frein et les cylindres de roue de l'essieu avant, caractérisé par le fait que le premier dispositif non hydraulique (10) d'assistance agit, de manière globalement connue, sur le premier piston (6), et que le deuxième dispositif non hydraulique (11) d'assistance agit sur le deuxième piston (8).

4. Régulateur hydraulique de pression de freinage selon une des revendications 1 à 3, caractérisé par le fait que la taille de la chambre (11) de compression du dispositif à ressort pneumatique est variable en fonction de l'état de charge du véhicule de telle sorte qu'à vide, l'on obtienne une valeur minimale, et qu'à charge maximale, l'on obtienne une valeur maximale.

5. Régulateur hydraulique de pression de freinage selon une des revendications 1 à 4, caractérisé par le fait que la chambre (11) de compression est réalisée sous forme d'une chambre cylindrique, pourvue d'un premier fond (12) de cylindre, mobile axialement, dont la position axiale est variable en fonction des paramètres du véhicule, ainsi que d'un deuxième fond (8 ou 13) de cylindre, mobile axialement, qui est relié à un des deux pistons (6, 8) de manière à transmettre les forces.

6. Régulateur hydraulique de pression de freinage selon les revendications 2 et 5, caractérisé par le fait que le deuxième fond (13) du cylindre, axialement mobile, porte un prolongement cylindrique (14) placé du côté opposé à la chambre (11) de compression, dont la face frontale s'appuie sur le premier piston (6), et qui constitue un cylindre de guidage (15) pour le deuxième piston (6), la paroi du prolongement cylindrique (14) étant pourvue de lumières (16) assurant une communication permanente entre la deuxième chambre (4) de pression et le canal de décharge (5).

7. Régulateur hydraulique de pression de freinage selon la revendication 6, caractérisé par le fait que le diamètre intérieur du cylindre de guidage (15), au moins dans la partie dans laquelle est logée le deuxième piston (8), est sensiblement plus faible que le diamètre de la première chambre (2) de pression recevant le premier piston (6).

8. Régulateur hydraulique de pression de freinage selon les revendications 3 et 5, caractérisé par le fait que le deuxième fond, axialement mobile, du cylindre de la chambre (11) de compression est constitué par le deuxième piston (8) lui-même.

9. Régulateur hydraulique de pression de freinage selon une des revendications 1 à 8, caractérisé par le fait qu'au moins une partie des pistons, tiges de pistons et fonds de cylindres, etc., axialement mobiles, sont suspendus au moyen de membranes (17) élastiques axialement, qui, en dehors de leur fonction de support, assurent des fonctions d'étanchéité ou de séparation.

Fig.1

Fig.2

Fig.3

Fig.4

Fig.5

Fig.6

Fig.7

Fig. 8

Fig.9

Fig.10